# EUROPEAN PATENT APPLICATION

(11) **EP 4 825 153 A1**
(43) Date of publication of application: **21.10.2026**
(21) Application number: 26161016.6
(22) Date of filing: 26.02.2026
(51) Int. Cl.: A01B 69/04, A01B 79/00, B60W 30/14

(54) **SPEED CONTROL FOR MOBILE WORK MACHINE**

(30) Priority: 15.04.2025 US 202519179767
(71) Applicant: Deere & Company, Moline, IL 61265 (US)
(72) Inventor: HANSEN, Matthew D, 68163 Mannheim (DE)
(74) Representative: Holst, Sönke

(57) **Abstract**

A speed control system obtains a set of parameters that can include path-based parameters, remote vehicle detection parameters, and engine load parameters. The speed control system generates a speed control indicator based on the parameters. A speed signal generator generates a speed control signal indicative of a target speed based on the speed control indicator.

## Description

The present descriptions relate to mobile work machines. More specifically, the present description relates to automatically controlling speed of a mobile work machine.

### BACKGROUND

There is a wide variety of different types of mobile work machines, such as construction equipment, turf management equipment, forestry equipment, and agricultural equipment. Taking agricultural equipment as an example, some such agricultural equipment includes agricultural harvesters and material transfer vehicles. Agricultural harvesters often engage crop, process that crop, and unload that crop into a material transfer vehicle, such as a tractor-pulled grain cart (for example).

Once the grain cart is filled to a desired fill level, a propulsion vehicle (such as a tractor or other vehicle) that pulls the grain cart navigates toward a container, such as a semi-trailer, pulls alongside the container, and transfers the harvested material to the container. As the propulsion vehicle approaches the container, a control system or operator positions an unloading spout or auger, and then, once alongside the container, engages the unloading auger on the grain cart to unload the harvested material from the grain cart into the container.

Other agricultural machines can include planting machines, sprayers, tillage machines, etc. Such machines travel through the field performing agricultural operations such as planting or applying other material to a field, spraying, tilling, etc. Other mobile work machines perform a wide variety of other operations as well.

The discussion above is merely provided for general background information and is not intended to be used as an aid in determining the scope of the claimed subject matter.

### SUMMARY

A speed control system obtains a set of parameters that can include path-based parameters, remote vehicle detection parameters, and engine load parameters. The speed control system generates a speed control indicator based on the parameters. A speed signal generator generates a speed control signal indicative of a target speed based on the speed control indicator.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a partial pictorial, partial block diagram of one example of an agricultural system.
FIG. 2 is a partial pictorial, partial block diagram of one example of an agricultural system.
FIG. 3 is a block diagram showing one example of an agricultural system with some parts of a mobile work machine shown in more detail.
FIG. 4 is a block diagram showing one example of a parameter fusion system in more detail.
FIG. 5 is a flow diagram showing one example of the operation of an agricultural system.
FIG. 6 illustrates a flow diagram showing one example of the operation of an automated speed control system in identifying a target speed based on path-based parameters and engine load parameters.
FIG. 7 illustrates a flow diagram showing one example of the operation of an automated speed control system in identifying a target speed based on remote vehicle detection parameters.
FIG. 8 is a block diagram showing one example of the agricultural system shown in other FIGs. deployed in a remote server environment.
FIGS. 9, 10, and 11 show examples of mobile devices that can be used in the architectures and systems shown in other FIGs.
FIG. 12 is a block diagram showing one example of a computing environment that can be used in the systems and architectures shown in other figures.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example may be combined with the features, components, and/or steps described with respect to other examples of the present disclosure.

As discussed above, there are many different types of mobile work machines, such as agricultural machines, construction machines, forestry machines, turf management machines, etc. The present description will be provided in the context of mobile agricultural work machines. However, the present description could just as easily apply to other mobile work machines in other areas as well.

Agricultural machines travel through a field performing agricultural operations. As an example, an agricultural harvester travels through a field performing a harvesting operation. The agricultural harvester often unloads harvested material into a material transfer vehicle. The material transfer vehicle then transfers the material to the location of a container where the material transfer vehicle unloads the material into the container. The container may be a haulage vehicle (such as semi-trailer or a grain truck) or another type of container. Other agricultural machines travel through a field performing other agricultural operations such as spraying, applying material to a field in other ways, planting, tilling, etc.

The efficiency of the agricultural operations can be improved, and the performance of the agricultural machines can also be improved, by controlling travel speed of the agricultural machines in a desired way. Some current agricultural machines have a cruise control system in which an operator sets a travel speed setting (or in which the travel speed setting is obtained as a default value) that identifies the travel speed of the agricultural machine. The cruise control system maintains the travel speed of the agricultural machine based on the travel speed setting until the operator changes the travel speed setting or until another action takes place (such as the operator disengaging the cruise control system by braking or by performing another operation).

Other agricultural machines have control systems with speed threshold settings (such as a maximum speed setting, a minimum speed setting, etc.). An operator inputs the speed threshold settings (or the speed threshold settings can be defined by default values), and a speed control system controls the travel speed of the agricultural machine so that the travel speed does not cross the speed threshold settings.

However, to increase productivity during an agricultural operation, it may be desirable for the ground speed of the agricultural vehicles to be changed under different circumstances. For instance, it may be efficient for a material transfer vehicle to travel as quickly as possible through the field, between the combine harvester and the container. However, the physical properties of the grain cart may change during the harvesting operation. For instance, the grain cart may be more or less full of grain at different times, thus changing the center of gravity of the grain cart. This may influence the desired target speed of the material transfer vehicle.

In addition, the environmental properties where the agricultural machine is operating may change as well based upon path-based parameters which are determined by the particular path or route being traversed by the agricultural machine. For instance, the terrain along the path or route may be rolling so that the pitch and/or roll of the agricultural machine changes during operation which may affect the desired target speed of the machine. By way of example, if the agricultural machine is approaching a headland turn, and if the agricultural machine is traversing terrain that is sloping so the agricultural machine is pitched downwardly (e.g., the agricultural machine is going downhill), then the agricultural machine may have a stopping distance or a deceleration curve which makes it less likely that the agricultural machine will be able to make the headland turn along the desired path or route. Instead, the agricultural machine may overshoot the headland turn requiring the agricultural machine to travel extra distance and on terrain outside of its desired path or route. Similarly, the path or route of the agricultural machine may have turns that may affect the desired target speed of travel.

In addition, the route or path of the agricultural machine may take the agricultural machine to or through one or more different areas of interest where the desired target speed is different. For instance, while an agricultural machine is traveling through a field, the desired speed may be a first desired speed which is relatively high. However, as the agricultural machine approaches an unloading zone or an area in a field that has particularly rough terrain, then the desired travel speed may be a second desired speed which is lower than the first desired travel speed. All of these path-based parameters make it difficult to obtain desired operating efficiency using a cruise control system or another speed control system that does not account for such parameters.

Similarly, there may be scenarios where the presence of another vehicle, that is remote from the agricultural vehicle, may influence the desired speed of the agricultural vehicle. For instance, assume that the agricultural vehicle is a harvester following a travel path, and that a second agricultural vehicle is also in the field, where the second agricultural vehicle is also a harvester following its own travel path. In such a scenario, the presence of the second agricultural harvester may not influence the desired speed of the first agricultural harvester, because both agricultural harvesters are traveling along their own travel paths. However, if the second vehicle is an unknown vehicle (a vehicle that is not known to or identifiable by the first agricultural harvester), then the desired travel speed of the first agricultural harvester may be reduced because the route of the unknown vehicle is not known and may present an obstacle or risk of collision to the first agricultural harvester. These types of remote vehicle detection parameters (e.g., detecting a vehicle that is known versus detecting a vehicle that is unknown) make it difficult to obtain desired operating efficiency using a cruise control system or other speed control system that does not account for such parameters.

In still other scenarios, the load on the engine of the agricultural machine may influence the desired travel speed of the agricultural machine. For instance, where the agricultural machine is a material transfer vehicle (e.g., a tractor-pulled grain cart), and the load on the engine is relatively high, this likely means that the grain cart is full. In that case, the deceleration curve (the distance that the agricultural machine must travel in order to decelerate by a given amount) may be longer and/or the stopping distance of the material transfer vehicle may be greater than the deceleration curve and/or the stopping distance of the material transfer vehicle when the grain cart is empty. If, on the other hand, the agricultural vehicle is a tillage machine and the engine load is high, this likely means that the tillage implement is engaging the soil and the stopping distance, and the deceleration curve are both shorter than when the implement is not engaging the soil and the engine load is low. As the stopping distance and/or the deceleration curve changes, the desired target speed of the agricultural machine may also change to maintain desired performance.

The problem of increasing efficiency and/or maintaining desired performance by controlling the speed of the agricultural machine can be exacerbated during automated or semi-automated operation.

Thus, the present description proceeds with respect to a system that includes an automated speed control system. The automated speed control system senses or obtains access to speed control parameters that may influence the desired ground speed of a mobile work machine. Such speed control parameters can include path-based parameters, remote vehicle detection parameters, engine load parameters, terrain/slope parameters and/or a combination of any such parameters with one another or with operator presence parameters, job quality parameters, surface roughness parameters, machine and/or operation type parameters, and/or any of a wide variety of manual or default setting values or other parameters. Based on the detected or generated speed control parameters, a speed control indicator generation system generates one or more speed control indicators that can be used to identify the desired target speed for the mobile work machine. The speed control indicators can be indicative of a suggested target speed for the mobile work machine as well as context information which may identify potentially hazardous conditions, the stopping distance of the mobile work machine, the acceleration/deceleration curves corresponding to the mobile work machine, and/or other speed control indicators. A speed signal generator receives, as inputs, the speed control indicators and generates a speed control signal based upon the speed control indicators. The speed control signal is indicative of the commanded target speed and is provided to a propulsion system for driving the mobile work machine at the target speed. The automated speed control system also detects changes in the speed control parameters and generates modified speed control indicators so that a new target speed can be identified based upon changing conditions or other changes that change the speed control parameters.

It will again be noted that the present description can apply to any mobile work machines. It is described herein, in some examples, with respect to the mobile work machine being an agricultural harvester or a material transfer vehicle, but these are examples only. The same description could just as easily apply where the mobile work machine is a tillage machine, sprayer, a planting machine, another type of mobile agricultural machine, a mobile construction machine, a mobile turf management machine, a mobile forestry machine, or other mobile work machine.

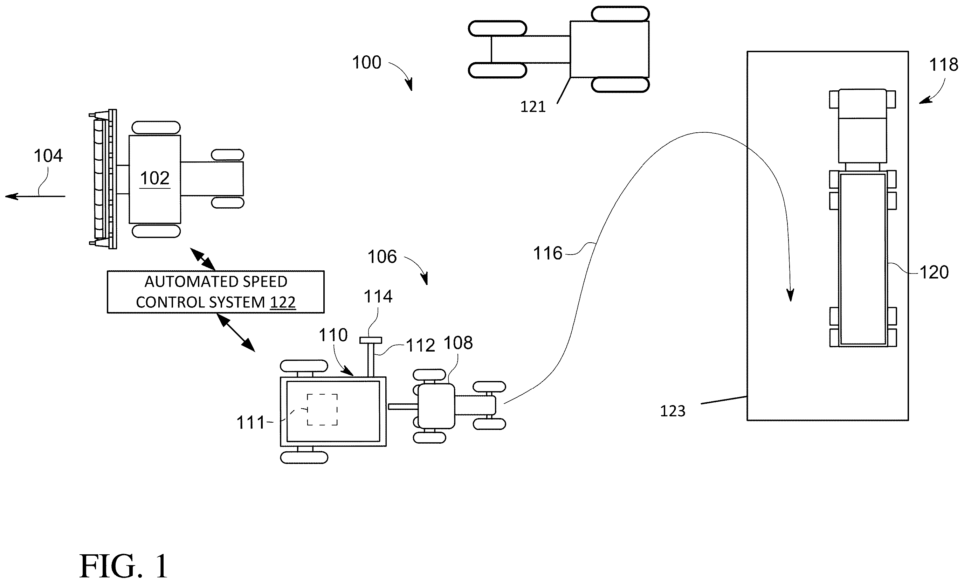

FIG. 1 is a pictorial illustration of one example of an agricultural system 100 in which a harvester 102 is moving through field in a direction and along a route or path indicated by arrow 104. A material transfer vehicle 106 includes a propulsion vehicle (e.g., a tractor) 108 and a grain cart 110. Grain cart 110 is shown having a conveyor 112 and a spout 114 that are used to unload harvested material from grain cart 110. Conveyor 112 may be a conveyor (such as an auger) that conveys material from grain cart 110 through a housing and out an exit end of conveyor 112. Spout 114 may be disposed on an exit end of conveyor 112 to direct material as the material exits through the exit end of conveyor 112. FIG. 1 also shows that grain cart 110 has a gate 111 disposed at the bottom of grain cart 110. To facilitate the transfer of material out of grain cart 110, gate 111 is opened to a desired position which allows the grain to fall into a hopper or into another collection basin where the grain can be transferred by conveyor 112.

In the example shown in FIG. 1, grain cart 110 has been filled with harvested material from harvester 102 and is traveling along a travel path indicated by arrow 116 toward a container (e.g., in the example shown in FIG. 1 the container is a semi-truck) 118. To unload material from grain cart 110, an operator (a human operator, an autonomous operator, or a semi-autonomous operator) actuates an actuator to position conveyor 112 to a deployed position. Tractor 108 pulls the grain cart 110 alongside semi-trailer 120 in unloading zone 123 so that the conveyor 112 can be engaged to transfer material from grain cart 110 into semi-trailer 120. In one example, spout 114 is movable to change the direction of material exiting conveyor 112 and to thus change the landing point of material inside semi-trailer 120. Also, in one example, conveyor 112 is driven by a power take off on tractor 108, although it may be driven by other actuators as well. The speed of the power takeoff or other actuator can be controlled to change the landing point as well.

As discussed above, to increase the efficiency of the harvesting operation, it may be desirable to control the speed of the agricultural vehicles (e.g., harvester 102 and/or material transfer vehicle 106, etc.) to operate at a desired target speed as those vehicles perform the agricultural operations. The desired target speed may depend on a variety of different speed control parameters.

Thus, an automated speed control system 122 automatically accesses or generates speed control parameters which may influence the desired target speed of an agricultural machine. The automated speed control system 122 automatically processes those parameters to identify speed control indicators which may indicate a suggested target speed for an agricultural machine, and which also may provide context information supporting the suggested target speed. The context information in the speed control indicators may indicate such things as obstacles or other conditions, the stopping distance of an agricultural machine, the acceleration and/or deceleration curves corresponding to the agricultural machine, the presence or absence of other vehicles in proximity to the agricultural machine, the slope or other terrain characteristics over which the agricultural machine is traveling, and/or other indicators that may influence the desired target speed. A speed signal generator in the automated speed control system 122 takes the speed control indicators, as inputs, and automatically generates a control signal to control the propulsion system of an agricultural machine 102, 106 to operate at a desired target speed, based upon the speed control indicators. By automatically, it is meant, in one example, that a step, method, or process is performed without further human involvement except, perhaps, to initiate or authorize the step, method, or process.

However, even after automated speed control system 122 identifies the desired target speed based upon the speed control parameters and speed control indicators, the speed control parameters can change, giving rise to different speed control indicators which result in a different desired target speed for vehicles 102 and/or 106.

Taking, for example, material transfer vehicle 106, it may be desirable to control material transfer vehicle 106 to travel as quickly as possible between harvester 102 and container 118. However, the conditions in the field and/or the conditions on material transfer vehicle 106 may change during the harvesting operation and may thus affect the desired target speed of material transfer vehicle 106. For instance, as material transfer vehicle 106 travels along route 116, material transfer vehicle 106 may encounter terrain that is sloped, rough, muddy, or having other characteristics that may affect the desired speed of material transfer vehicle 106. Similarly, when material transfer vehicle 106 is traveling along route 116, grain cart 110 may be full of harvested material which may change the location of the center of gravity of grain cart 110 from its location when grain cart 110 is empty or is only partially full. Further, when grain cart 110 is full, this may increase the distance that it takes material transfer vehicle 106 to decelerate and come to a stop (e.g., this may affect the deceleration curve and stopping distance of material transfer vehicle 110).

Similarly, where harvester 102 or material transfer vehicle 106 detects the presence of another vehicle 121 (which may be another harvester, another material transfer vehicle, a farm manager vehicle, or an unknown vehicle), the presence of that vehicle and its proximity to harvester 102 or material transfer vehicle 106 may affect the desired target speed of the agricultural machine 102, 106.

Also, where the travel path 104, 116 of the agricultural machine 102, 106 takes the agricultural machine close to an obstacle (such as a fence, a creek or other waterway, etc.), or close to another area of interest such as into a loading zone 123, the conditions may become unfavorable if the agricultural machine 102, 106 is traveling too fast. Thus, the proximity of the agricultural machine 102, 106 relative to an obstacle, or area of interest, or to a potential hazard may affect the desired speed of the agricultural machine 102, 106.

In addition, where the load on the engine or motor powering agricultural machine 102, 106 changes, this may also affect the desired travel speed of the agricultural machine 102, 106. For instance, when the load on the engine driving tractor 108 is high on terrain that has a minimal slope, this tends to indicate that grain cart 110 is full thus increasing mass, and hence the stopping distance of material transfer vehicle 106. However, if the agricultural machine is a tillage machine, then a high engine load tends to indicate a high draft force (that the tillage implement is engaging the soil), thus reducing the stopping distance of the agricultural machine. In both cases, the engine load may affect the desired target speed of the agricultural machine. Thus, the engine load, in combination with the type of machine and/or type of agricultural operation being performed, can be used to identify the desired target speed of the agricultural machine.

Therefore, in the example shown in FIG. 1, automated speed control system 122 automatically detects changes in speed control parameters and computes or identifies new speed control indicators that can be used to compute a new desired target speed for the agricultural machine 102, 106. Thus, automated speed control system 122 helps to automatically ensure that the agricultural machines 102, 106 are operating at a speed which maintains or improves the efficiency and accuracy of the agricultural operation being performed, even under changing conditions.

In addition, in one example, automated speed control system 122 may receive an input identifying the route 104, 116 over which harvester 102 or material transfer vehicle 106 is about to travel. Automated speed control system 122 can access other parameters corresponding to agricultural vehicle 102, 106 (such as the terrain along route 104, 116, the soil conditions along route 104, 116, the curvature of turns on route 104, 116, and other factors) and generate a predicted or estimated target speed for agricultural vehicle 102, 106. The predicted or estimated target speed may indicate the target speed of the agricultural machine 102, 106 along its route or travel path 104, 116.

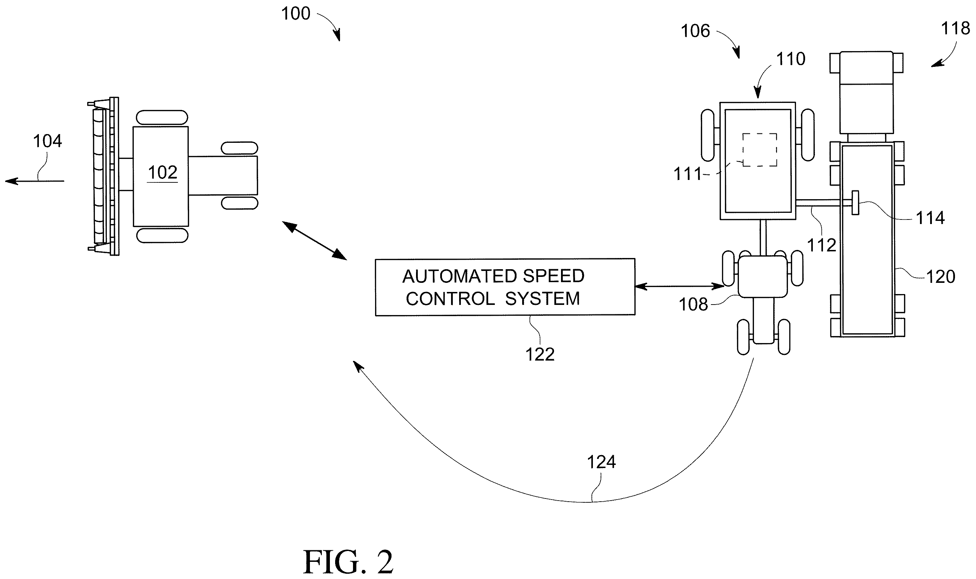

FIG. 2 is a partial pictorial, partial block diagram of agricultural system 100. Some items in FIG. 2 are similar to those shown in FIG. 1 and are similarly numbered. However, FIG. 2 shows that material transfer vehicle 106 has now pulled into unloading zone 123 and alongside haulage vehicle 118 so that the spout 114 is positioned over semi-trailer 120. Thus, material transfer vehicle 106 can be automatically controlled to move along semi-trailer 120 as material is unloaded from grain cart 110 into semi-trailer 120.

Once the unloading operation is complete (e.g., when grain cart 110 is empty, or semi-trailer 120 is full), then material transfer vehicle 106 can continue along the route or path indicated by arrow 124 back to agricultural harvester 102 or to a different agricultural harvester or to a different location. It will be noted that the speed control parameters corresponding to material transfer vehicle 106 in FIG. 2 are different from those in FIG. 1. In FIG. 2, the grain cart 110 is being unloaded, or has been unloaded. For instance, the weight of material in grain cart 110, the location of the center of gravity of grain cart 110, the engine load on the engine or motor driving propulsion vehicle 108, the location of material transfer vehicle 124 relative to an area of interest (unloading zone 123) and relative to a known vehicle (haulage vehicle 118), and the route and/or travel path of material transfer vehicle 106 have all changed from those in FIG. 1.

Thus, automated speed control system 122 can sense or access the new speed control parameters corresponding to material transfer vehicle 106 as it is unloading material into semi-trailer 120 and after it has unloaded material into semi-trailer 120 and is about to drive back to agricultural harvester 102 along route 124 and generate a new current target speed for material transfer vehicle 106 and a new estimated future target speed for material transfer vehicle 106.

Automated speed control system 122 can detect changes in speed control parameters corresponding to harvester 102 as well. For instance, as harvester 102 travels along route or travel path 104, the slope and/or terrain may change, and those changes can be detected by automated speed control system 122 and used to compute a new desired target speed for harvester 102. Similarly, as harvester 102 approaches an area of interest, such as a headland, unloading zone 123, or another area of interest, this can also be detected and used by automated speed control system 122 to change the desired target speed of harvester 102. Further, as detectors on harvester 102 detect the presence of other vehicles or machines, automated speed control system 122 can modify the desired target speed of harvester 102 based upon the presence of other machines or vehicles, whether they are known vehicles or machines or unknown vehicles or machines.

With respect to the present description, it will be noted that automated speed control system 122 can be located in various different locations. Automated speed control system 122 can be located on propulsion vehicle 108, on harvester 102, on a remote system, on another vehicle, or distributed among various locations. For instance, portions of automated speed control system 122 may be located on propulsion vehicle 108 while other parts are located on grain cart 110, on haulage vehicle 118, on harvester 102, or in a remote server environment. Automated speed control system 122 is shown at a single location for the sake of example only.

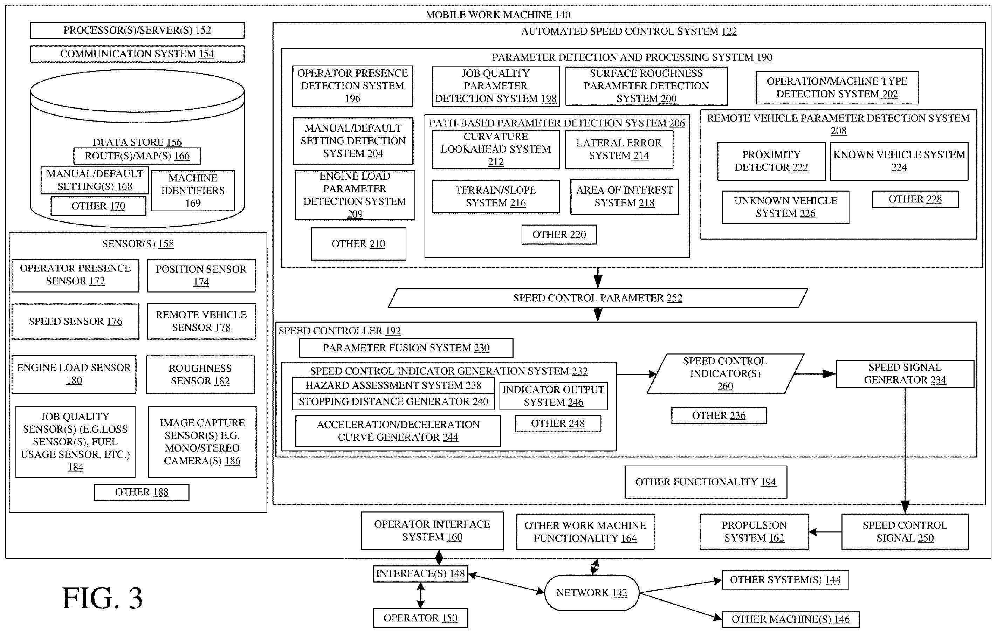

FIG. 3 is a block diagram showing one example of agricultural system 100 in more detail. In the example shown in FIG. 3, a mobile work machine 140 can communicate over network 142 with other systems 144 and/or other machines 146. Mobile work machine 140 can be harvester 102, material transfer vehicle 106, an agricultural sprayer, an agricultural planting machine, an agricultural tillage machine, and/or any of a wide variety of other mobile agricultural machines. In the example shown in FIG. 3, mobile agricultural machine 140 also generates interfaces 148 for interaction by operator 150. Interfaces 148 can be generated directly by mobile work machine 140 (such as displayed on a display device in the operator compartment of mobile work machine 140) or transmitted through network 142 (such as to a mobile device carried by operator 150) for interaction by operator 150.

Network 142 can be a wide area network, a local area network, a near field communication network, a Wi-Fi or Bluetooth network, a cellular communication network, and/or any of a wide variety of other networks or combinations of networks. Other systems 144 can be farm manager systems, vendor systems, maintenance systems, planning systems, and/or any of a wide variety of other systems. Other machines 146 can be other machines operating in the same field as mobile work machine 140 or in a different field or located elsewhere. Other machines 146 can be machines that are known to mobile work machine 140 or that are unknown.

FIG. 3 also shows that mobile work machine 140 includes one or more processors or servers 152, communication system 154, data store 156, sensors 158, automated speed control system 122, operator interface system 160, propulsion system 162, and any of a wide variety of other work machine functionality 164. Data store 156 can store routes or maps 166, manual and/or default settings 168, machine identifiers 169, and other items 170. Sensors 158 can include operator presence sensor 172, position sensor 174, speed sensor 176, remote vehicle sensor 178, engine load sensor 180, roughness sensor 182, job quality sensors 184, image capture sensors 186, and/or other sensors 188. Automated speed control system 122 can include parameter detection and processing system 190, speed controller 192, and other functionality 194. Parameter detection and processing system 190 can include operator presence detection system 196, job quality parameter detection system 198, surface roughness parameter detection system 200, operation/machine type detection system 202, manual/default setting detection system 204, path-based parameter detection system 206, remote vehicle parameter detection system 208, engine load parameter detection system 209, and other items 210. Path-based parameter detection system 206 can include curvature look ahead system 212, lateral error system 214, terrain/slope system 216, area of interest system 218, and other items 220. Remote vehicle parameter detection system 208 can include proximity detector 222, known vehicle system 224, unknown vehicle system 226, and other items 228. Speed controller 192 can include parameter fusion system 230, speed control indicator generation system 232, speed signal generator 234 and other items 236. Speed control indicator generation system 232 can include hazard assessment system 238, stopping distance generator 240, acceleration/deceleration curve generator 244, indicator output system 246, and other items 248. Before describing the overall operation of agricultural system 100 in more detail, a description of some items in mobile work machine 140, and their operation, will first be provided.

Communication system 154 illustratively facilitates the communication of items on mobile work machine 140 with one another and also facilitates communication over network 142. Therefore, communication system 154 can be a controller area network (CAN) bus and bus controller, a cellular communication system, a wide area network communication system, a local area network communication system, a cellular communication system, a Wi-Fi, Bluetooth, or other near field communication system, and/or any of a wide variety of other communication systems or combinations of systems.

Routes/maps 166 may include field maps that map characteristics of the field to geographic locations. Routes/maps 166 may also include the paths or routes for mobile work machine 140 through a field to perform an agricultural operation. Manual/default settings 168 may include any of a wide variety of manually input or default settings values that can be used to control mobile work machine 140. Machine identifiers 169 can include data that is used to identify other machines, remote for mobile work machine 140, that are detected by mobile work machine 140. For instance, machine identifiers 169 may be a catalog of images of other machines so that mobile work machine 140 can capture an image of another machine and compare that image against the catalog of images. Machine identifiers 169 may include identifiers corresponding to individual machines along with data corresponding to that machine. The data can include such things as machine type, machine dimensions, machine assignment (where the machine has been assigned a particular agricultural operation), machine routes or paths, and/or any of wide variety of other machine data.

Sensors 158 can generate sensor signals and that are responsive to a sense variable. The sensor signals can be conditioned (such as amplified, filtered, linearized, normalized, aggregated, or conditioned in other ways). Operator presence sensor 172 is configured to detect whether an operator is present on-board mobile work machine 140. For instance, in the case of harvester 102, operator presence sensor 172 is configured to detect whether an operator is present within an operator compartment of harvester 102. Operator presence detection can be accomplished in a number of ways. For instance, operator presence sensor 172 may be a camera such that operator presence detection can be performed by processing images captured from the camera where those images capture a view of the operator compartment. Operator presence sensor 172 may be one or more seat switches that detect operator presence based on switch depression. Operator presence may also be detected based upon input or lack of input received from operator input mechanisms (i.e., whether an operator is engaging controls within the operator compartment), as examples.

Position sensor 174 is configured to identify a position of mobile work machine 140 and a corresponding route (e.g., heading) of mobile work machine 140 as machine 140 traverses the field or worksite. Position sensor 174 senses the geographic position of mobile work machine 140 in a global or local coordinate system. Position sensor 174 can be a global positioning system (GPS) receiver, a dead reckoning system, a long-range navigation (LORAN) system, a cellular triangulation system, or a wide variety of other systems or sensors that provide an indication of the position of mobile work machine 140.

Speed sensor 176 senses the travel speed of mobile work machine 140 over the ground. Speed sensor 176 can sense the travel speed of mobile work machine 140 by sensing the speed of rotation of the ground engaging traction elements (wheels or tracks), a drive shaft, an axle, or other components on mobile work machine 140. In some instances, the travel speed can be sensed using the position sensor 174. Speed sensor 176 and/or position sensor 174 can also include direction sensors such as a compass, a magnetometer, a gravimetric sensor, a gyroscope, GPS derivation, to determine the direction of travel in two or three dimensions in combination with the speed. This way, when mobile work machine 140 is on a slope, the orientation of mobile work machine 140 relative to the slope can be known. For example, an orientation of mobile work machine 140 could include ascending, descending or transversely travelling the slope.

Remote vehicle sensor 178 is configured to sense the presence and proximity of other vehicles in the proximity of mobile work machine 140. Remote vehicle sensor 178 may also be able to detect whether the other vehicles are known vehicles or unknown vehicles. For instance, data store 156 may include a set of machine identifiers 169 that include known vehicle records identifying vehicles that are known, and whose function may be known or specified. The vehicle records may identify the vehicles by vehicle identification number (VIN) or other vehicle identifier and may specify the function of that vehicle (e.g., tillage implement, material transfer vehicle, combine harvester, haulage vehicle, etc.). Where the detected vehicle does not have a corresponding record, then the detected vehicle may be identified as an unknown vehicle.

Remote vehicle sensors 178 may be a sensor that reads information or receives information from the other vehicle. Sensor 178 may be an RFID reader, a receiver that receives data transmitted by the other vehicle - which may include the identifier corresponding to the other vehicle, an image capture device such as a camera and an image processing or computer vision system which can be used to detect the other vehicle, to identify the proximity of the other vehicle relative to mobile work machine 140, and potentially to identify the other vehicle by performing image processing or computer vision analysis on captured images of the other vehicle, or another sensor. Remote vehicle sensor 178 may also be a RADAR sensor, a LIDAR sensor, or another sensor that can be used to identify the presence, location, and proximity of the other vehicle relative to mobile work machine 140.

Engine load sensor 180 may be a torque sensor that senses the torque applied to an output shaft from an engine or motor driving propulsion of mobile work machine 140 or another sensor configured to sense the load on the engine in other ways.

Roughness sensor 182 is configured to detect roughness of the terrain being operated upon by mobile work machine 140. As discussed below, detected roughness can be utilized to select a desired target speed based on a predefined or user selected ride quality or ride smoothness setting. As one example, roughness sensor 182 can include accelerometers, inertial measurement units, gyroscopic sensors, etc., that detect pitch, roll, and yaw of mobile work machine 140, as well as acceleration on multiple axes. Thus, pitch data during a sampling interval can be used to obtain pitch acceleration and roll data for the sampling interval can be used to obtain roll acceleration. Alternatively, or in addition, image data of the worksite in a forward field of view of mobile work machine 140 can be collected, for example from image capture sensors 186 (described below). Based on the collected image data, a visual surface roughness value can be estimated for the area of the field in front of mobile work machine 140.

Job quality sensors 184 can be sensors that sense variables indicative of job quality. For instance, where mobile work machine 140 is an agricultural harvester, job quality sensors 184 may include loss sensors that sense grain loss during the harvesting operation. Job quality sensors 184 may also be fuel usage sensors which detect the rate at which mobile work machine 140 is using fuel, and/or any of a wide variety of other sensors that sense variables indicative of job quality.

Image capture sensors 186 can include one or more of a variety of sensors, such as cameras (e.g., mono cameras, stereo cameras, color (e.g. RGB) cameras, multispectral cameras, etc.), LIDAR sensors, RADAR sensors, ultrasonic sensors, as well as various other sensors configured to emit and/or receive electromagnetic radiation, as well as a variety of other sensors. Image capture sensors 186 can illustratively observe (and thus detect characteristics relative to) the worksite or field over which mobile work machine 140 is traveling, items at the worksite or field (e.g., vegetation, including crops at the worksite, other vehicles at the worksite, obstacles or other items), and portions of mobile work machine 140, itself.

Automated speed control system 122 receives inputs from one or more sensors 158 and can access data from data store 156 and/or other locations. Automated speed control system 122 processes that data and generates a speed control signal 250 which can be applied to propulsion system 162 to control the speed of mobile work machine 140. Parameter detection and processing system 190 detects, computes, accesses, or otherwise obtains a set of speed control parameters 252 and provides those parameters to speed controller 192. Based on the speed control parameters 252, speed controller 192 generates speed control signal 250.

It will be noted that automated speed control system 122 can be implemented using a single machine learning model, control algorithm, or other processing system. In other examples, the various systems and generators in automated speed control system 122 can each be a separate machine learning model or separate algorithm or other system. Further, the individual systems and generators shown in automated speed control system 122 are each shown separately for the sake of example only. A plurality of different systems and generators in automated speed control system 122 can be incorporated into a single model, algorithm, or other system. The machine learning models and algorithms may take inputs from sensors 158, data store 156, parameters that are generated by system 122, and/or other sources and generate outputs as described below. The machine learning models can be generative artificial intelligence (AI) models, artificial neural networks, support vector machines, decision trees, regression models, clustering models, different types of classifiers, and/or any of a wide variety of other models. The rules-based systems or algorithms can include forward or backward chaining systems, hybrid systems, production systems, logic programming systems, or other rules-based systems or algorithms.

To generate speed control parameters 252, operator presence detection system 196 can detect whether an operator is present on mobile work machine 140 based upon an input from operator presence sensor 172. For instance, if operator presence sensor 172 is a seat switch or an image capture device, then operator presence detection system 196 determines whether an operator is present by determining whether the sensor signal indicates that the seat switch is depressed or that the image captured contains an image of an operator. Operator presence detection system 196 can generate an output indicating whether an operator is present on mobile work machine 140 in other ways as well.

Job quality parameter detection system 198 receives inputs from one or more sensors 158 (such as job quality sensors 184) and generates an output indicative of one or more job quality parameters based upon those inputs. For instance, job quality parameter detection system 198 can be configured to generate performance metrics indicative of the operational performance of mobile work machine 140. The performance metrics indicate the quality of the work being performed by mobile work machine 140 across one or more dimensions. Some of the performance metrics may increase as machine speed increases. That is, the performance metric increases (e.g., the job quality increases) as the machine speed increases (e.g., in some scenarios the fuel efficiency will increase as speed increases, or the productivity will increase as speed increases). Other performance metrics have an inverse relationship to machine speed. That is, the performance metric decreases (e.g., the job quality degrades) as machine speed increases. In one example, job quality parameter detection system 198 is configured to calculate a performance or job quality metric score for each of a plurality of different performance pillars (or performance categories) that can be used to characterize the operation of mobile work machine 140. The performance categories can vary depending on the type of work machine and operations to be performed on the worksite.

Surface roughness parameter detection system 200 receives inputs from one or more roughness sensors 182 (and may receive inputs from other sources) and generates an output indicative of a surface roughness parameter that characterizes the roughness of the surface over which mobile work machine 140 is traveling, or the surface that is ahead of mobile work machine 140 along its route or travel path. Surface roughness parameter detection system 200 can include a surface roughness estimator that determines or estimates the surface roughness of the worksite area based on the detected motion data, pitch data, roll data, and/or other position or movement data.

The surface roughness can be measured or quantified in any of several ways. For instance, the data from roughness sensor 182 can be utilized to generate a surface roughness metric on a predefined scale (e.g., 0 to 100). Based on machine speed, surface roughness can be correlated to an expected machine ride quality or roughness. For example, surface roughness parameter detection system 200 can estimate the precise attitude (e.g., yaw data, roll data, or both) of mobile work machine 140 as well as the current or predicted acceleration (e.g., in meters per second squared (m/s²) on any of several axes. The surface roughness parameter can be computed as a maximum attitude and/or acceleration of mobile work machine 140 and the machine speed can be selected to maintain the actual machine attitude and acceleration below a target surface roughness parameter. Further, when ride quality is utilized as a weighting constraint in generating the target machine speed, a target machine ride roughness setting can be set, and the machine speed can be selected to maintain the machine ride quality below the target setting. This, of course, just one example of how surface roughness parameters can be used in identifying a target machine speed.

Operation/machine type detection system 202 can receive inputs from one or more sensors 158 and/or from operator 150 or from other sources and generate an output indicative of the agricultural operation being performed by mobile work machine 140 as well as the type of mobile work machine 140 (e.g., whether mobile work machine 140 is a tillage machine, and agricultural harvester, a material transfer vehicle, etc.). Operation/machine type detection system 202 can receive a work machine assignment, for example, from remote system 144 or from operator 150, that indicates a starting location, a destination location and a path to be taken from the starting location to the destination location across the worksite. The work machine assignment can also identify mobile work machine 140, itself, as well as the agricultural operation that is being performed. Operation/machine type detection system 202 can also identify areas of interest in the field at which the agricultural operations are to be performed (e.g., areas to be harvested, sprayed, tilled, planted, etc.).

Manual/default setting detection system 204 can access manual or default settings 168 when those settings may influence the desired target speed for mobile work machine 140. For instance, manual/default settings 168 may specify threshold values for ride quality, proximity to other vehicles (vehicles that are known and unknown), threshold speed values when mobile work machine 140 is approaching different areas of interest (such as unloading zone 123, a headland, a waterway or fence or other obstacle or hazard, etc.), and/or any of a wide variety of other manual or default settings.

Path-based parameter detection system 206 receives inputs from various sensors 158, data store 156, and/or other sources, and calculates parameters based on the path or route over which mobile work machine 140 is traveling. For instance, curvature lookahead system 212 can look ahead along the path or route to identify curves that mobile work machine 140 will be navigating, and the severity of the curves (how sharp the curves are). Curvature lookahead system 212 may thus generate a curvature lookahead pattern that identifies locations where the travel speed of mobile work machine 140 should be reduced based upon the fact that mobile work machine 140 will be navigating a sharp curve. By way of example, the radius or degree of curvature of the machine path can be utilized to identify a predicted effect on the performance metrics, as the machine enters the curvature, which in turn can be utilized to identify a path-based parameter which would tend to indicate a target machine speed increase or decrease.

In one example, system 212 can apply threshold values so that curves that are below a threshold number of degrees need not be considered in computing the path-based parameter for more work machine 140 while curves that are greater than the threshold value will be considered. System 212 may use different thresholds based upon the estimated or measured center of gravity of mobile work machine 140 or based upon other parameters.

Lateral error system 214 tracks the lateral error of mobile work machine 140 as it travels along its route or path. For instance, after mobile work machine 140 makes a headland turn, mobile work machine 140 may not acquire its desired path or route immediately and there may be a lateral error until the path or route is acquired. Similarly, as the navigation system on mobile work machine 140 is controlling mobile work machine 140 to follow the prescribed path or route, there may be instances where the lateral error is measurable. In many cases, the lateral error will increase with the speed of mobile work machine 140. In one example, lateral error system 214 can compute lateral error based on a comparison of a current location of the machine 140 as detected by position sensor 174 and a machine path defined in a work assignment. Therefore, lateral error system 214 can generate a lateral error parameter indicative of the magnitude of the lateral error, the frequency with which the lateral error exceeds a threshold value, etc., as mobile work machine 140 attempts to follow a path or route.

Terrain/slope system 216 can identify the terrain or slope of the ground along the path or route being traversed by mobile work machine 140. In one example, terrain/slope system 216 can receive sensor inputs from position sensor 174 and identify the orientation of mobile work machine 142 to compute the slope of the terrain over which it is traveling. In another example, terrain/slope system 216 can access a topography map 166 from data store 156 and identify the slope of the terrain along the route of mobile work machine 140 using the topography map. Terrain/slope system 216 can thus generate a terrain/slope parameter indicative of whether the terrain slopes to such an extent that the slope should be considered in determining the target speed of mobile work machine 140.

Area of interest system 218 identifies areas of interest (such as unloading zones, areas of rough terrain, areas adjacent obstacles, fences, creeks or other waterways, etc.) that lie along the route or path being traversed by mobile work machine 140. Area of interest system 218 generates an area of interest parameter that indicates locations where mobile work machine 140 may be in an area of interest, or closely proximate an area of interest, so that the area of interest would affect the desired target speed of mobile work machine 140. For instance, if mobile work machine 140 is traveling along a creek or fence, then the target speed of woke mobile work machine 140 may be reduced to reduce the likelihood that mobile work machine 140 will cross the boundary of the creek or collide with the fence. Similarly, where mobile work machine 140 is approaching an unloading zone 123, then the target speed of mobile work machine 140 may also be reduced to enhance the positioning accuracy of mobile work machine 140 relative to a haulage vehicle 118 or other container. These are examples only.

Remote vehicle parameter detection system 208 can determine whether there are other vehicles within a given proximity of mobile work machine 140 and identify those vehicles or determine that the identity of the vehicles is unknown. For instance, proximity detector 222 can receive signals from remote vehicle sensor 178 and determine whether any other vehicles are within a predetermined proximity or a dynamically changing proximity of mobile work machine 140. The proximity may be a static distance value, or the proximity may change based upon the current speed and/or route of mobile work machine 140 or based on other criteria.

Known vehicle system 224 can process information related to the detected vehicle to determine whether the detected vehicle can be identified (e.g., the type of vehicle, the type of operation the vehicle is performing, the route or path being traversed by the vehicle, other data corresponding to the vehicle etc.) based on information contained in machine identifiers 169 or based on other information. If the vehicle is known, then system 224 processes the information about the vehicle and generates a known vehicle parameter indicative of whether the target speed of mobile work machine 140 should be influenced based upon the detected vehicle. For instance, if the detected vehicle is a harvester traveling along a travel path or route that will not affect the operation of mobile work machine 140, then the known vehicle parameter may indicate that the target speed of mobile work machine 140 need not be modified or influenced based upon the presence of the known vehicle. However, if the known vehicle is a farm manager vehicle that is approaching mobile work machine 140, then the known vehicle parameter may indicate that the speed of mobile work machine 140 should be reduced or that mobile work machine 140 should be stopped. These are just examples of a known vehicle parameter.

Unknown vehicle system 226 may process vehicle data where the vehicle is not identifiable or is not known and generate an unknown vehicle parameter that can be used in determining the speed of mobile work machine 140. For instance, if there is an unknown vehicle that is closely proximate to (e.g., within a threshold distance of) mobile work machine 140, then the unknown vehicle parameter may indicate that the speed of mobile work machine 140 should be reduced. However, if unknown vehicle system 226 determines that the unknown vehicle is moving away from the route of mobile work machine 140, then the unknown vehicle parameter may indicate that the speed of mobile work machine 140 need not be changed based on the presence of the unknown vehicle.

Engine load parameter detection system 209 can receive inputs from engine load sensor 180 and generate an engine load parameter based on the engine load. Under certain circumstances, the engine load may influence the desired target speed of mobile work machine 140. The engine load parameter generated by engine load parameter detection system 209 may simply indicate the engine load or may indicate whether the speed of mobile work machine 140 should be increased, decreased, or remain unchanged, based upon the engine load.

In speed controller 192, parameter fusion system 230 may receive multiple different parameters from parameter detection and processing system 190 and fuse or combine those parameters to obtain values that can be used by speed control indicator generation system to generate speed control indicators 260. Speed control indicator generation system 232 receives the outputs from parameter fusion system 230 and can receive other parameters generated by parameter detection and processing system 190, inputs from sensors 158, data store 156, and/or other information and generates speed indicators 260. For instance, parameter fusion system 230 may receive an input from operator presence detection system 196 indicative of whether an operator is present in mobile work machine 140, as well as an input from operation/machine type detection system 202, and an input from area of interest system 218 indicating that mobile work machine 140 is about to travel close to a fence line. Parameter fusion system 230 can then generate an output based on whether an operator is present, the type of machine and operation being performed, and the proximity of the fence line to mobile work machine 140 to hazard assessment system 238. Hazard assessment system 238 may receive those inputs and generate a speed control indicator 260 indicating a target speed suggestion as well as context information supporting the target speed suggestion. The context information may include, for example, that mobile work machine 140 is about to enter an environment where extra caution is recommended (e.g., mobile work machine 140 is about to enter an area where it is in close proximity to a fence line, where there is no operator present, and mobile work machine 140 is a sprayer with a boom that extends a relatively large distance outwardly from the body of mobile work machine 140). In such a case, hazard assessment system 238 may provide a speed control indicator 260 indicating the suggested target speed and the need for increased caution and accuracy in performing the agricultural operation. Based on that speed control indicator 260, speed signal generator 234 may generate speed control signal 250 indicating that the speed of mobile work machine 140 should be reduced, should be a set to a specific level, or should otherwise be controlled based upon the hazard assessment represented by the speed control indicator 260.

Stopping distance generator 240 may receive inputs from sensors 158, data store 156, parameter detection and processing system 190, and/or parameter fusion system 230 and generate an output indicative of whether the stopping distance of mobile work machine 140 should influence the desired target speed of mobile work machine 140. For instance, stopping distance generator 240 may receive an input from speed sensor 176 indicative of a current speed of mobile work machine 140 and may also receive an input from terrain/slope system 216 and an input from operations/machine type detection system 202 indicating that work machine 140 is a harvester 102 with a clean grain tank that is nearly full and indicating that harvester 102 is approaching a headland turn on a downhill slope. Stopping distance generator 240 may thus compute the stopping distance of harvester 102 and determine, based upon the fact that it is approaching a headland turn on a downhill slope, the speed of mobile work machine 140 should be reduced to a speed so that it can more accurately navigate the headland turn. Stopping distance generator 240 provides an output to indicator output system 246 which generates a speed control indicator 260 indicating a desired target speed computed by stopping distance generator 240, as well as context information. The context information may include the information used by stopping distance generator 240 to derive the desired target speed and/or any other information. Speed signal generator 234 may, in turn, or in response, generate speed control signal 250 indicating a target speed for mobile work machine 140, or indicating that the speed of mobile work machine 140 should be reduced. These are examples only, and stopping distance generator 240 can generate speed control indicators 260 in other ways as well.

Acceleration/deceleration curve generator 244 may receive inputs from sensors 158, data store 156, parameter detection and processing system 190, fusion system 230, and/or other sources and generate an output indicative of the acceleration and/or deceleration curves for mobile work machine 140 and whether those curves should influence the desired target speed of mobile work machine 140. For instance, acceleration/deceleration curve generator 244 may generate an output indicating how quickly mobile work machine 140 can accelerate and decelerate under the current circumstances, (e.g., given the parameters output by parameter detection and processing system 190 and/or parameter fusion system 230). The output from acceleration/deceleration curve generator 244 may also generate an output indicating a desired target speed for mobile work machine 140 based upon the acceleration/deceleration curves, in view of the other parameters. Indicator output system 246 receives the output from acceleration/deceleration curve generator 244 and can generate a speed control indicator 260 corresponding to that output. These feed control indicator 260 can include the desired target speed for mobile work machine 140 as well as the context information used to derive the desired target speed.

Based upon the various speed control indicators 260, speed signal generator 234 generates the speed control signal 250. Speed signal generator 234 may receive a plurality of different speed control indicators 260 that may specify or suggest different desired target speeds for mobile work machine 140. For instance, some speed control indicators 260 may be generated based upon speed control parameters that indicate that the speed of mobile work machine 140 can be increased. Other speed control indicators 260 may be generated based upon speed control parameters that indicate that the speed of mobile work machine 140 should be decreased.

Speed signal generator 234 can therefore select a target speed or combine the suggested target speed into an aggregated value or compute or derive the target speed for mobile work machine 140 in other ways. For instance, speed signal generator 234 can select a most conservative speed control indicator or apply voting logic to the speed control indicators 260 two select the target speed output in speed control signal 250. Speed signal generator 234 can combine the desired target speeds in the various speed control indicators 260 by weighting the suggested target speeds provided by the various speed control indicators 260 based upon a predetermined precedence hierarchy or based upon other weighting criteria. Speed signal generator 234 may combine the speed control indicators (such as by averaging them) based upon their weights to obtain a target speed for mobile work machine 140. In addition, the importance of each speed control parameter 252 and each speed control indicator 260 may vary depending on the type of machine and the agricultural operation being performed by mobile work machine 140 or for other reasons. Further, speed signal generator 234 may apply thresholds to the different speed control parameters 252 and/or speed control indicators 260. If the speed control parameters 252 and/or speed control indicators 260 have values which do not meet a threshold value, then those parameters 252 and indicators 260 may be ignored by speed signal generator 234 or weighted lower in determining speed control signal 250. Speed signal generator 234 can generate speed control signal 250 in other ways as well.

Propulsion system 162 includes an engine (or other power source) that drives a set of ground engaging traction elements, such as wheels or tracks. Thus, propulsion subsystem 162 can include an internal combustion engine, an electric motor, a hydraulic motor, individual drive motors for each set of traction elements, or a drive motor that drives a group of traction elements. Propulsion system 162 can also include a drivetrain or other transmission elements.

Operator interface system 160 can include operator interface mechanisms that can be used by operator 150 in an operator compartment of mobile work machine 140 to control and manipulate mobile work machine 140. Therefore, those operator interface mechanisms can include joysticks, a steering wheel, peddles, levers, linkages, buttons, etc. Further, the operator interface mechanisms can include a display screen that displays information to the operator 150 and that receives inputs from operator 150 through operator actuatable input mechanisms such as links, icons, buttons, etc. The display screen may be a touch sensitive screen where the operator interface mechanisms can be actuated using touch gestures. Further, operator interface system 160 can include a microphone and speaker where speech recognition and speech synthesis are provided and can include a wide variety of other mechanisms that provide audio, visual, and/or haptic outputs to an operator 150 and/or receive inputs from an operator 150.

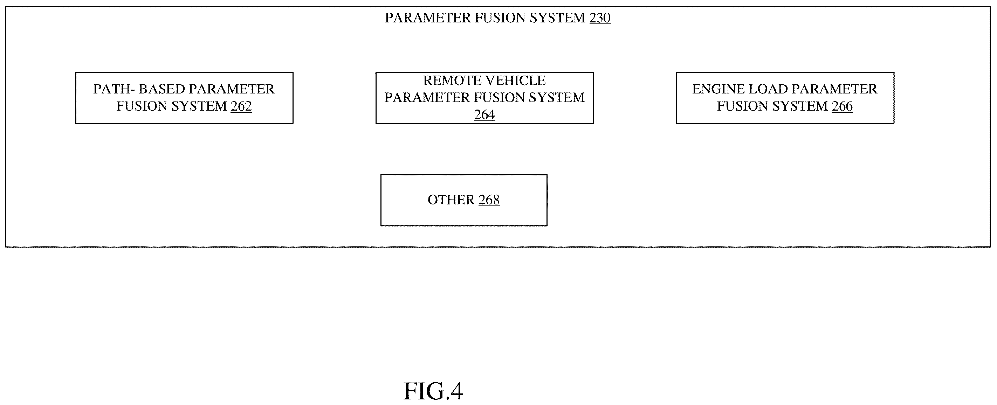

FIG. 4 is a block diagram showing one example of parameter fusion system 230 in more detail. In the example shown in FIG. 4, parameter fusion system 230 includes path-based parameter fusion system 262, remote vehicle parameter fusion system 264, engine load parameter fusion system 266, and any of a wide variety of other fusion systems 268. Path-based parameter fusion system 262 can fuse or combine parameters generated by path-based parameter detection system 206 with one another and with any of a variety of other speed control parameters 252. Thus, path-based parameter fusion system 262 may combine the engine load parameter output by engine load parameter detection system 209 with the operation/machine type output by operation/machine type detection system 202 along with the parameter output by terrain/slope system 216 and the parameter output by curvature lookahead system 212 to generate a fused parameter that may be used by stopping distance generator 240 to calculate the stopping distance of mobile work machine 140 and to determine whether that stopping distance should affect the target speed of mobile work machine 140. The fused output may also be used by acceleration/deceleration curve generator 244 to compute the deceleration curve for mobile work machine 140 and determine whether that is problematic (e.g., whether mobile work machine 140 is rapidly approaching a sharp turn on a downhill slope) in a way that should affect the desired target speed of mobile work machine 140.

Remote vehicle parameter fusion system 264 can fuse parameters output by remote vehicle parameter detection system 208 with one another and with other speed control parameters 252. For instance, remote vehicle parameter fusion system 264 can fuse the output from proximity detector 222 and unknown vehicle system 226 to generate a fused output indicating that mobile work machine 140 is traveling in very close proximity to an unknown vehicle. Speed control indicator generation system 232 can then generate a speed control indicator 260 identifying the fused parameters as indicating that the speed of mobile work machine 140 should be reduced.

Engine load parameter fusion system 266 can fuse the parameter output by engine load parameter detection system 209 with the output by operation/machine type detection system 202. For instance, if the engine load parameter output by engine load parameter detection system 209 indicates that the engine is under heavy load and operation/machine type detection system 202 generates an output indicating that the mobile work machine 140 is a material transfer vehicle, then this tends to indicate that the grain cart 110 of the material transfer vehicle is full, which affects the stopping distance, the acceleration and deceleration curves, and other speed control indicators. Speed control indicator generation system 232 can thus generate a speed control indicator 260 indicating a suggested target speed as well as context information reflecting that the engine load and machine type indicate that the speed of mobile work machine 140 can be increased or should be decreased.

The fusion systems shown in FIG. 4 are shown for the sake of example only. Any of a wide variety of other fusion systems 268 can be used to specifically fuse any of a wide variety of other parameters to cover other scenarios which may influence the desired target speed of mobile work machine 140.

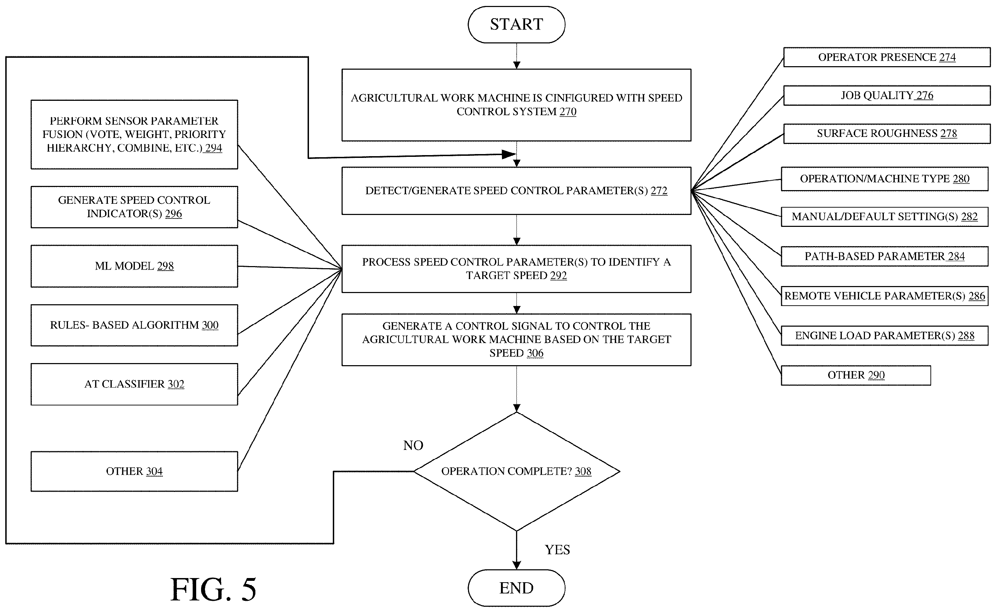

FIG. 5 is a flow diagram illustrating one example of the operation of automated speed control system 122. It is first assumed that agricultural work machine 140 is configured with automated speed control system 122 and various sensors 158 that are used by automated speed control system 122, as indicated by block 270 in the flow diagram of FIG. 5. Parameter detection and processing system 190 then detects and/or generates speed control parameters 252, as indicated by block 272 in the flow diagram of FIG. 5. Speed control parameters 252 can be generated or output based on operator presence 274 as detected by operator presence detection system 196, based on job quality 276 as output by job quality parameter detection system 198, based on surface roughness 278, as output by surface roughness parameter detection system 200, based on operation/machine type 280, as output by operation/machine type detection system 202, based on manual/default settings 282, as output by manual/default setting detection system 204, based on path-base parameters 284, as output by path-based parameter detection system 206, based on remote vehicle parameters 286, as output by remote vehicle parameter detection system 208, based on engine load parameters 288, as output by engine load parameter detection system 209, and/or based on any of a wide variety of other parameters 290.

Speed controller 192 then processes the speed control parameters 252 to identify a target speed for mobile work machine 140, as indicated by block 292. In one example, parameter fusion system 230 performs sensor or parameter fusion on speed control parameters 252, as indicated by block 294. To fuse the various parameters or sensor signals, parameter fusion system 230 can use voting logic, weight the parameters 252 and/or sensor signals to be fused, combine the parameters and/or sensor signals according to a priority hierarchy, combine them by aggregating them (e.g., averaging them), or in other ways. In addition, the method by which parameter fusion system 230 fuses the parameters and/or sensor signals may vary based on the type of machine and/or based upon the agricultural operation being performed by mobile work machine 140.

Also, in one example, speed control indicator generation system 232 generates speed control indicators 260 based upon the parameters 252, fused parameters, sensor signals, and/or other information. The speed control parameters 260 illustratively indicate a suggested target speed for mobile work machine 140 as well as context information used to derive the suggested target speed. The contextual information may include such things as an output from hazard assessment system 238, an output from stopping distance generator 240, an output from acceleration/deceleration curve generator 244, and/or any other information. Generating speed control indicators 260 is indicated by block 296 in the flow diagram of FIG. 5.

Again, it will be noted that the various systems and generators in automated speed control system 122 can be machine learning models 298, rules-based algorithms 300, artificial intelligence classifiers or other artificial intelligence generators 302, or other systems 304. The speed control parameters 252 can be processed to identify a target speed in a wide variety of other ways 304 as well.

Speed signal generator 234 then generates a control signal 250 to control the propulsion system 162 of mobile work machine 140 based upon the target speed, as indicated by block 306. The control signal 250 controls propulsion system 162. The control signal 250 can also control operator interface system 160 to notify operator 150 of a speed change or to facilitate other operator interactions. Until the agricultural operation is complete, as determined at block 308, operation reverts to block 272 where parameter detection processing system 190 continues to detect/generate the speed control parameters 252.

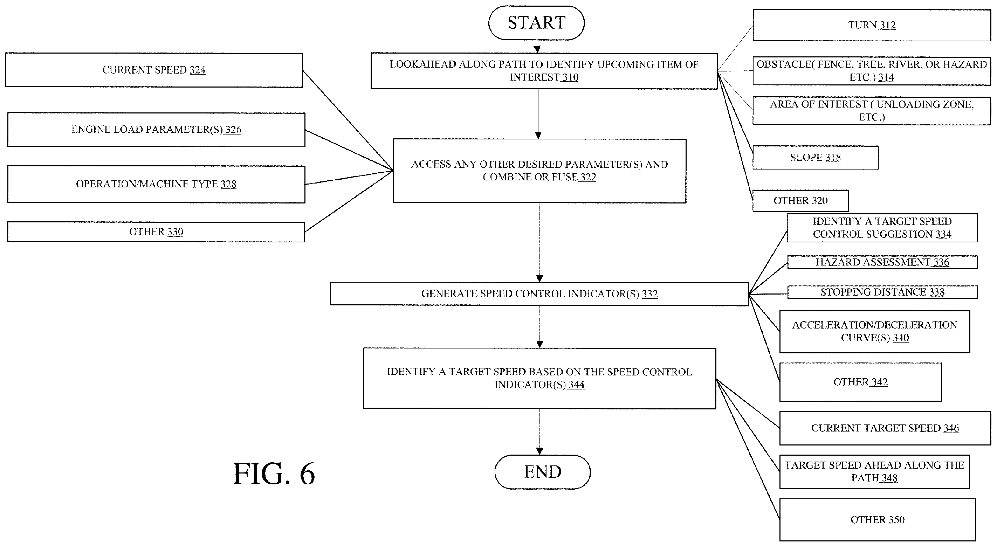

FIG. 6 is a flow diagram illustrating one example of the operation of automated speed control system 122 in processing path-based parameters generated by path-based parameter detection system 206. Path-based parameter detection system 206 accesses the path or route of mobile work machine 140 and looks ahead along the path to identify any upcoming items of interest, as indicated by block 310 and the flow diagram of FIG. 6. For instance, curvature lookahead system 212 can identify upcoming turns, as indicated by block 312. Area of interest system 218 can identify any obstacles or hazards (such as fences, trees, rivers, etc.) as indicated by block 314, as well as any areas of interest (such as an unloading zone 123 or other areas of interest), as indicated by block 316. Terrain/slope system 216 can identify whether mobile work machine 140 is approaching any areas that have a slope or other terrain features that may affect the desired target speed of work machine 140, as indicated by block 318. Path-based parameter detection system 206 can identify other path-based parameters as well, as indicated by block 320.

Speed controller 192 can access any other desired parameters or information and parameter fusion system 230 can fuse some or all parameters under analysis as well as any other information (such as sensor information, etc.) that is being analyzed. Accessing other parameters in performing fusion or combining the parameters is indicated by block 322 in the flow diagram of FIG. 6. Some other parameters that may be considered by speed controller 192 in processing path-based parameters may include the current speed of mobile work machine 140 based on the output from speed sensor 176, as indicated by block 324. Other parameters may include engine load parameters generated by engine load parameter detection system 209, as indicated by block 326. Still other parameters may include the operation/machine type output by operation/machine type detection system 202, as indicated by block 328. Speed controller 192 can obtain or access any of a wide variety of other parameters or other information 330, as well.

The parameters or combined parameters are then provided to speed control indicator generation system 232 which generates one or more speed control indicators 260, as indicated by block 332. The speed control indicators 260 may include a suggestion for speed control (such as a suggested target speed, a suggested action-to reduce the target speed, to increase the target speed, etc.) or another target speed control suggestion, as indicated by block 334. The speed control indicator may also include context information, such as information identifying a hazard assessment 336 output by hazard assessment system 238. The speed control indicator 260 can include context information, such as a computed stopping distance 338 output by stopping distance generator 240 and/or an acceleration/deceleration curve computed by acceleration/deceleration curve generator 244, as indicated by block 340. The speed indicators 260 can include any of a wide variety of other information as well, as indicated by block 342.

Speed signal generator 234 can then identify a target speed and output a speed control signal 250 based on the identified target speed. The speed control signal 250 can be based on the speed control indicators 260, as indicated by block 344. The speed control signal 250 can identify the current desired target speed 346, the target speed ahead of mobile work machine 140 along the path being traversed by mobile work machine 140, as indicated by block 348, and/or any of a wide variety of other information 350. The speed control signal 250 can be applied to propulsion system 162 to control the speed of mobile work machine 140.

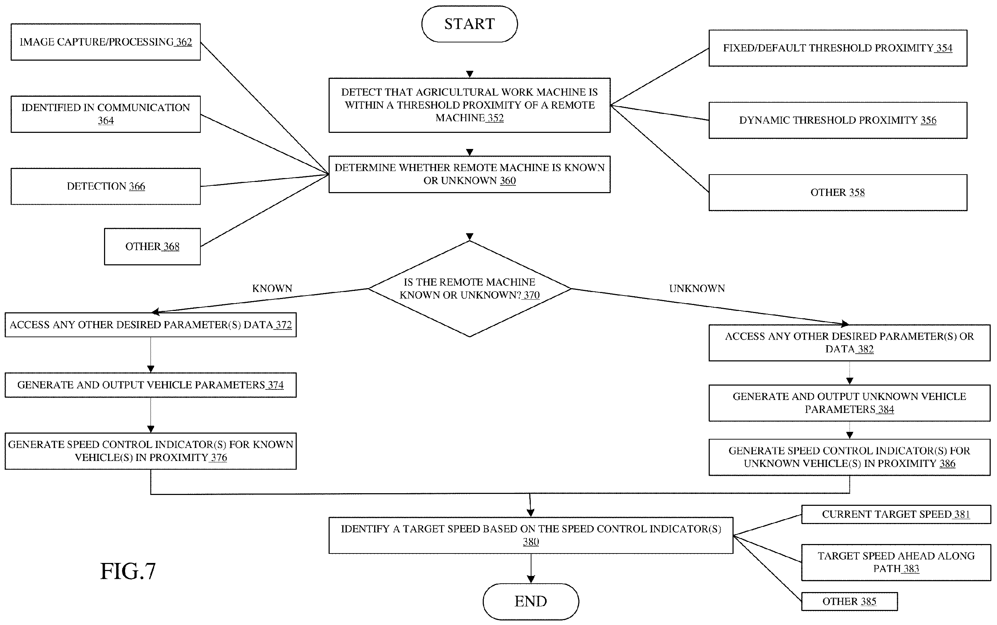

FIG. 7 is a flow diagram illustrating the operation of automated speed control system 122 in generating a speed control signal 250 based upon vehicle detection parameters generated by remote vehicle parameter detection system 208. Proximity detector 222 detects that agricultural work machine 140 is within a threshold proximity of a remote vehicle or remote machine, as indicated by block 352 in the flow diagram of FIG. 7. It will be noted that the threshold proximity value may be a fixed or default value, as indicated by block 354, or the threshold may be a dynamic threshold value that varies for instance based on the current speed of mobile work machine 140, based upon the route of mobile work machine 140, or based on other criteria, as indicated by block 356. Proximity detector 222 can detect the remote machine based upon a signal from remote vehicle sensor 178, or in other ways, as indicated by block 358.

Known vehicle system 224 can determine whether the remote vehicle is known or unknown, as indicated by block 360. For example, known vehicle system 224 may receive an image of the remote vehicle from image capture sensors 186 and process that image in an attempt to identify the vehicle by, for instance, comparing visual features of the vehicle to features of known vehicle stored in data store 156 or by comparing those features against a library of features stored elsewhere, or by performing other image capture and image processing or computer vision processing, as indicated by block 362. In another example, the remote machine or vehicle may transmit its identity to mobile work machine 140 using communication system 154. Identifying whether the remote vehicle is known or unknown based upon communication received from that vehicle as indicated by block 364 in the flow diagram of FIG. 7. In another example, remote vehicle sensor 178 may read an RFID tag on the remote vehicle, identify a QR code on the vehicle, or detect other identifying information on the remote vehicle. Identifying the remote vehicle by detecting or reading characteristics of the remote vehicle is indicated by block 366 in the flow diagram of FIG. 7. Determining whether the remote vehicle is known or unknown can be performed in other ways as well, as indicated by block 368.

Depending on whether the remote vehicle is known or unknown, as indicated at block 370 in the flow diagram of FIG. 7, known vehicle system 224 may generate the remote vehicle parameters, or unknown vehicle system 226 may generate the remote vehicle parameters. If the vehicle is known, then known vehicle system 224 may access any other desired parameters or data corresponding to the known vehicle, as indicated by block 372. For instance, if the vehicle is another harvester, then known vehicle system 224 may access the route or path assigned to that harvester to determine whether that route or path is close to the route or path being followed by mobile work machine 140. Known vehicle system 224 may access the dimensions of the known vehicle from machine identifiers 169 in data store 156 or from another location, the work assignment corresponding to that vehicle, and/or any of a wide variety of other parameters or data. Known vehicle system 224 can also generate other vehicle parameters and output the generated vehicle parameters as speed control parameters 252 as indicated by block 374 in the flow diagram of FIG. 7. Speed controller 192 receives speed control parameters 252 and generates speed control indicators 260 corresponding to the known vehicle that is within the threshold proximity of mobile work machine 140. Generating speed control indicators 260 as indicated by block 376 in the flow diagram of FIG. 7. The speed control indicators 260 may include a target speed control suggestion (such as a desired target speed or action - to increase speed, reduce speed, stop, etc.) as well as context information, such as the identity of the known vehicle, the location of the known vehicle relative to mobile work machine 140, etc. Speed signal generator 234 then identifies a target speed based on the speed control indicators 260 and generates speed control signal 250. Identifying the target speed based on the speed control indicators 260 as indicated by block 380 in the flow diagram of FIG. 7.

If, at block 370, it is learned that the detected vehicle or machine is unknown, then unknown vehicle system 226 accesses any other desired parameters or data corresponding to the unknown vehicle. That data may include the location of the unknown vehicle relative to mobile work machine 140, whether that location is changing (e.g., whether the unknown vehicle is approaching or moving away from mobile work machine 140), among other things. Accessing any other desired parameters or data corresponding to the unknown vehicle is indicated by block 382 in the flow diagram of FIG. 7. Unknown vehicle system 226 then generates and outputs unknown vehicle parameters as speed control parameters 252, and as indicated by block 384 in the flow diagram of FIG. 7.

Speed control indicator generation system 232 then generates speed control indicators 260 corresponding to the unknown vehicle in proximity of mobile work machine 140 based upon the speed control parameters 252. The speed control indicators 260 may identify a target speed control suggestion for mobile work machine 140, as well as context information. Generating the speed control indicators 260 is indicated by block 386 in the flow diagram of FIG. 7.

Speed signal generator 234 then generates speed control signal 250, as indicated by block 380. Again, the speed control signal can include current target speed for mobile work machine 140, as indicated by block 381, a target speed ahead of mobile work machine 140 along the path or route being traversed by more work machine 140, as indicated by block 383, and/or any of a wide variety of other information 385.

It can thus be seen that the present description describes a system that detects or generates a wide variety of different parameters, such as path-based parameters, remote vehicle-based parameters, engine load parameters, area of interest parameters, terrain/flow parameters, among others, and generates target speed control suggestions and context information based upon those parameters. A speed signal generator 234 identifies a target speed for mobile work machine 140 based upon the various target speed control suggestions and context information and automatically controls the speed of mobile work machine 140 based on the identified target speed. This increases the efficiency and accuracy of the operation being performed by the mobile work machine.

In one example, artificial intelligence (AI) can be utilized to receive the speed control indicators 260 and/or speed control parameters, and to determine how to adjust machine speed to achieve desired efficiency and/or accuracy. Machine learning and training components can include a variety of different types of learning mechanisms, such as a neural network that is trained based on corresponding training logic using training data. Briefly, a neural network can include a deep neural network (DNN), such as a convolutional neural network (CNN). Of course, other types of classification or learning mechanisms, such as rule-based classifiers, Bayesian network, decision trees, etc. can be utilized. Such a machine learning model or Al model or other mechanism can thus model the effect of changes in machine speed on various machine performance categories or other evaluation data given context data to identify the desired target speed.

The present discussion has mentioned processors and servers. In one example, the processors and servers include computer processors with associated memory and timing circuitry, not separately shown. The processors or servers are functional parts of the systems or devices to which they belong and are activated by and facilitate the functionality of the other components or items in those systems.

Also, a number of user interface (UI) displays have been discussed. The UI displays can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, the mechanisms can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which the mechanisms are displayed is a touch sensitive screen, the mechanisms can be actuated using touch gestures. Also, where the device that displays the mechanisms has speech recognition components, the mechanisms can be actuated using speech commands.

A number of data stores have also been discussed. It will be noted the data stores can each be broken into multiple data stores. All can be local to the systems accessing the data stores, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components, generators, detectors, and/or logic. It will be appreciated that such systems, components, generators, detectors, and/or logic can be comprised of hardware items (such as processors and associated memory, or other processing components, some of which are described below) that perform the functions associated with those systems, components, generators, detectors, and/or logic. In addition, the systems, components, generators, detectors, and/or logic can be comprised of software that is loaded into a memory and is subsequently executed by a processor or server, or other computing component, as described below. The systems, components, generators, detectors, and/or logic can also be comprised of different combinations of hardware, software, firmware, etc., some examples of which are described below. These are only some examples of different structures that can be used to form the systems, components, generators, detectors, and/or logic described above. Other structures can be used as well.

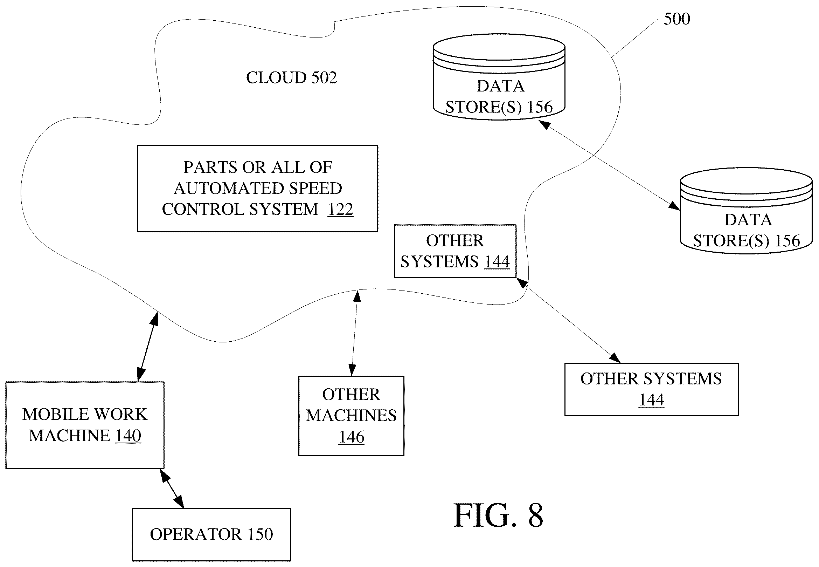

FIG. 8 is a block diagram of agricultural system 100, shown in FIG. 1, except that it communicates with elements in a remote server architecture 500. In an example, remote server architecture 500 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network, and they can be accessed through a web browser or any other computing component. Software or components shown in previous FIGS. as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, the components and functions can be provided from a conventional server, or they can be installed on client devices directly, or in other ways.

In the example shown in FIG. 8, some items are similar to those shown in previous FIGS. and they are similarly numbered. FIG. 8 specifically shows some or all of automated speed control system 122, other systems 144, and/or data store 156 can be located at a remote server location 502. Therefore, items in agricultural system 100 access those systems through remote server location 502.

FIG. 8 also depicts another example of a remote server architecture. FIG. 8 shows that it is also contemplated that some elements of previous FIGS are disposed at remote server location 502 while others are not. By way of example, data store 156 and other systems 144 can be disposed at a location separate from location 502 and accessed through the remote server at location 502. Regardless of where the items are located, the items can be accessed directly by mobile work machine 140, through a network (either a wide area network or a local area network), the items can be hosted at a remote site by a service, or the items can be provided as a service, or accessed by a connection service that resides in a remote location. Also, the data can be stored in substantially any location and intermittently accessed by, or forwarded to, interested parties. All of these architectures are contemplated herein.

It will also be noted that the elements of previous FIGS., or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

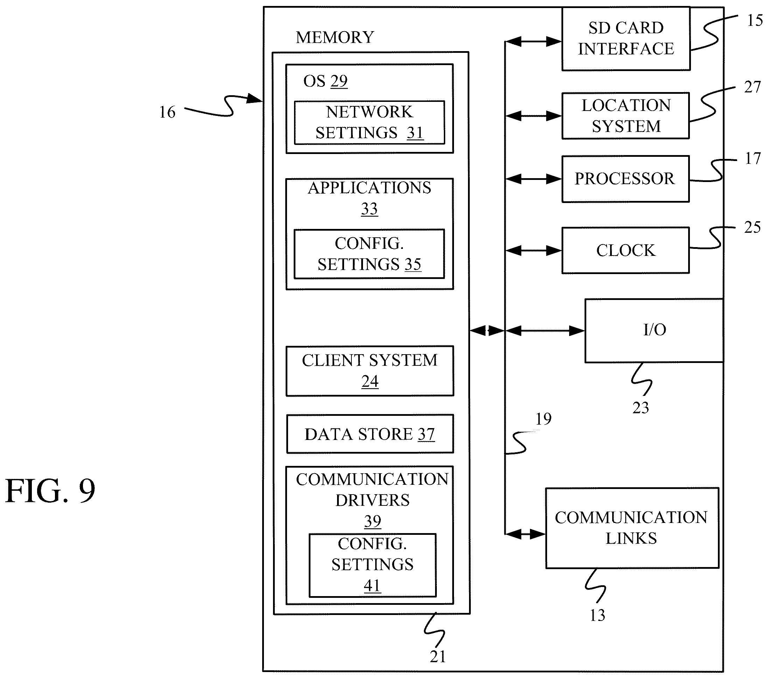

FIG. 9 is a simplified block diagram of one illustrative example of a handheld or mobile computing device that can be used as a user's or client's handheld device 16, in which the present system (or parts of it) can be deployed. For instance, a mobile device can be deployed in the operator compartment of mobile work machine 140 for use in generating, processing, or displaying speed data. FIGS. 9-11 are examples of handheld or mobile devices.

FIG. 9 provides a general block diagram of the components of a client device 16 that can run some components shown in previous FIGS., that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

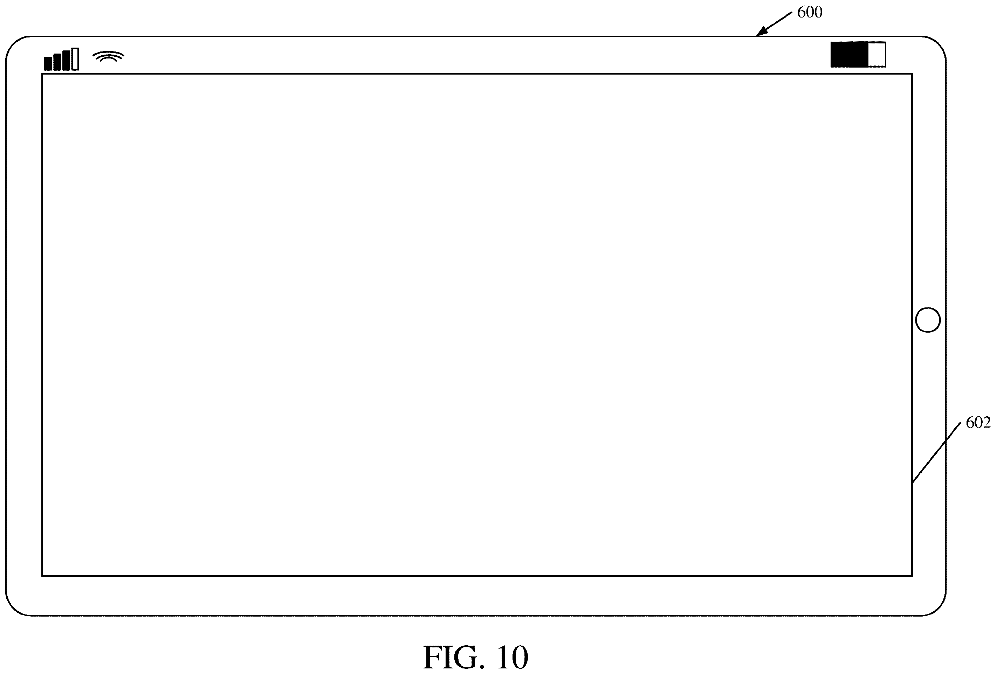

FIG. 10 shows one example in which device 16 is a tablet computer 600. In FIG. 10, computer 600 is shown with user interface display screen 602. Screen 602 can be a touch screen or a pen-enabled interface that receives inputs from a pen or stylus. Computer 600 can also use an on-screen virtual keyboard. Of course, computer 600 might also be attached to a keyboard or other user input device through a suitable attachment mechanism, such as a wireless link or USB port, for instance. Computer 600 can also illustratively receive voice inputs as well.

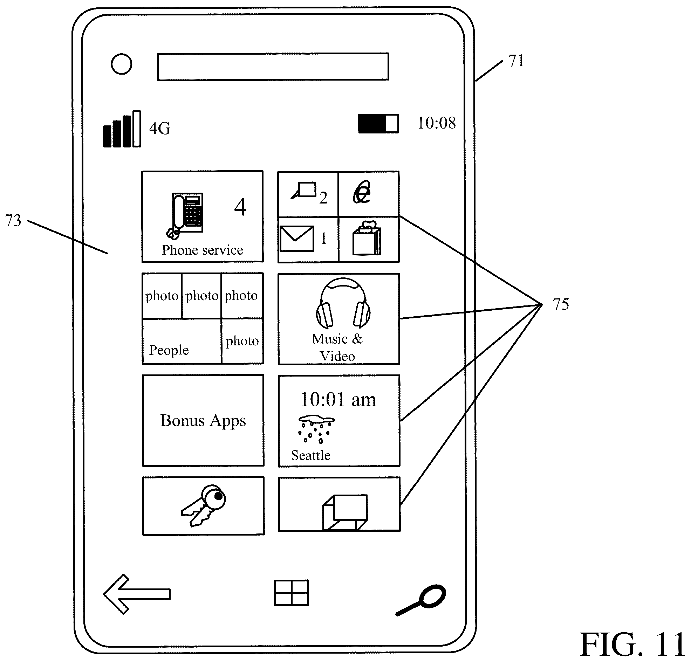

FIG. 11 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

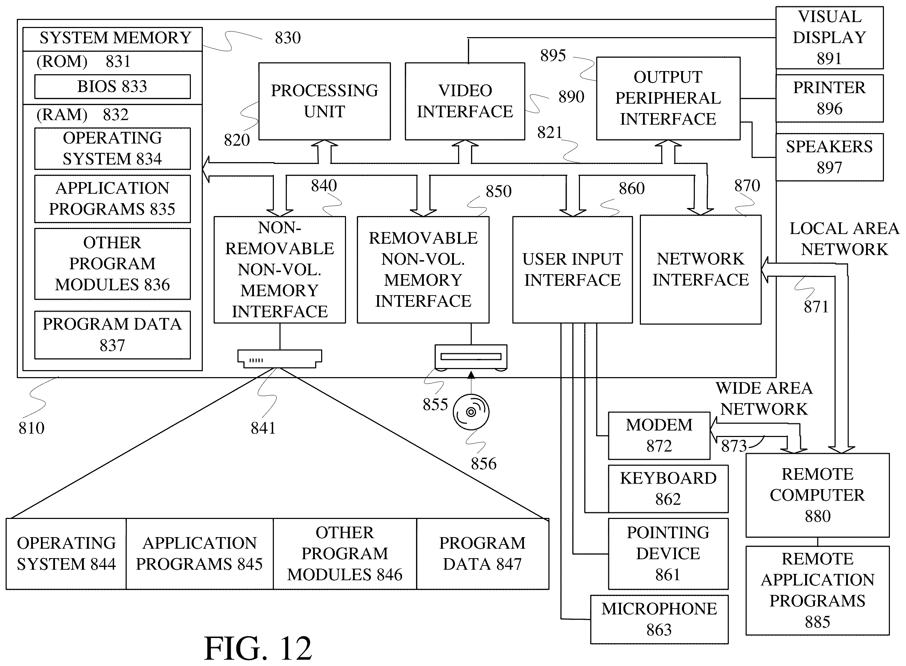

FIG. 12 is one example of a computing environment in which elements of previous FIGS., or parts of it, (for example) can be deployed. With reference to FIG. 12, an example system for implementing some embodiments includes a computing device in the form of a computer 810 programmed to operate as described above. Components of computer 810 may include, but are not limited to, a processing unit 820 (which can comprise processors or servers from previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to previous FIGS. can be deployed in corresponding portions of FIG. 12.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include a modulated data signal or carrier wave. Computer storage media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory such as read only memory (ROM) 831 and random-access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 12 illustrates operating system 834, application programs 835, other program modules 836, and program data 837.

The computer 810 may also include other removable/non-removable volatile/nonvolatile computer storage media. By way of example only, FIG. 12 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 12, provide storage of computer readable instructions, data structures, program modules and other data for the computer 810. In FIG. 12, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 12 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer implemented method, comprising:
receiving (272) a sensor signal indicative of a sensed parameter;
generating (322) a speed control parameter based on the sensor signal;
generating (322) a speed control indicator indicative of a suggested speed for a mobile work machine based on the speed control parameter; and
generating (306) a speed control signal, indicative of a target speed for the mobile work machine, based on the speed control indicator.

2. The computer implemented method of claim 1 wherein generating a speed control parameter comprises:
detecting a remote vehicle within a threshold proximity of the mobile work machine;
identifying a characteristic of the remote vehicle; and
generating a remote vehicle speed control parameter corresponding to the detected remote vehicle based on the characteristic of the remote vehicle.

3. The computer implemented method of claim 2 wherein identifying a characteristic of the remote vehicle comprises:
determining whether the remote vehicle is a known remote vehicle or an unknown remote vehicle, wherein generating the remote vehicle speed control parameter comprises generating a remote known vehicle speed control parameter when the remote vehicle is determined to be a known vehicle and generating a remote unknown vehicle speed control parameter when the remote vehicle is determined to be an unknown vehicle.

4. The computer implemented method of claim 1 wherein generating a speed control parameter comprises:
detecting an engine load on an engine of the mobile work machine;
generating an engine load speed control parameter based on the engine load;
identifying an additional speed control parameter; and
generating a fused speed control parameter based on the engine load speed control parameter and the additional speed control parameter, wherein generating the speed control indicator comprises generating the speed control indicator based on the fused speed control parameter.

5. The computer implemented method of claim 1 wherein generating a speed control parameter comprises:
obtaining a route corresponding to the mobile work machine;
identifying an area of interest based on the route; and
generating a path-based speed control parameter based on the area of interest, wherein generating the speed control indicator comprises generating the speed control indicator based on the path-based speed control parameter.

6. The computer implemented method of claim 1 wherein generating a speed control indicator comprises:
generating a plurality of different speed control indicators based on one or more of a remote vehicle speed control parameter, an engine load speed control parameter, or a path-based speed control parameter, each of the plurality of different speed control indicators having a separate suggested speed and a set of context data.

7. The computer implemented method of claim 6 wherein generating a speed control signal comprises:
generating the speed control signal based on the suggested speed and the context data in the plurality of different speed control indicators.

8. The computer implemented method of claim 7 wherein generating the speed control signal based on the suggested speed and the context data in the plurality of different speed control indicators comprises:
combining the suggested speed in the plurality of different speed control indicators based on the context data to obtain a combined suggested speed; and
generating the speed control signal based on the combined suggested speed.

9. The computer implemented method of claim 7 wherein generating the speed control signal based on the suggested speed and the context data in the plurality of different speed control indicators comprises:
selecting one of the suggested speeds in the plurality of different speed control indicators based on the context data to obtain a selected speed; and
generating the speed control signal based on the selected speed.

10. A mobile work machine, comprising:
a sensor (158) configured to generate a sensor signal indicative of a sensed parameter;
a parameter detection and processing system 190) configured to generate a speed control parameter based on the sensor signal;
a speed control indicator generation system (232) configured to generate a speed control indicator indicative of a suggested speed for the mobile work machine based on the speed control parameter; and
a speed signal generator configured to generate a speed control signal, indicative of a target speed for the mobile work machine, based on the speed control indicator.

11. The mobile work machine of claim 10 wherein the parameter detection and processing system comprises:
a proximity detector configured to detect a remote vehicle within a threshold proximity of the mobile work machine; and
a remote vehicle parameter detection system configured to identify a characteristic of the remote vehicle and generate a remote vehicle speed control parameter corresponding to the detected remote vehicle based on the characteristic of the remote vehicle.

12. The mobile work machine of claim 11 wherein the remote vehicle parameter detection system comprises:
a known vehicle system configured to determine whether the remote vehicle is a known remote vehicle or an unknown remote vehicle and generate a remote known vehicle speed control parameter when the remote vehicle is determined to be a known vehicle; and
an unknown vehicle system configured to generate a remote unknown vehicle speed control parameter when the remote vehicle is determined to be an unknown vehicle.

13. The mobile work machine of claim 10 and further comprising:
an engine load sensor configured to detect an engine load on an engine of the mobile work machine;
an engine load parameter detection system configured to generate an engine load speed control parameter based on the engine load, the parameter detection and processing system being configured to identify an additional speed control parameter; and
a parameter fusion system configured to generate a fused speed control parameter based on the engine load speed control parameter and the additional speed control parameter, wherein the speed control indicator generation system is configured to generate the speed control indicator based on the fused speed control parameter.

14. The mobile work machine of claim 10 wherein the parameter detection and processing system comprises:
a path-based parameter detection system configured to obtain a route corresponding to the mobile work machine; and
an area of interest system configured to identify an area of interest based on the route and generate a path-based speed control parameter based on the area of interest, wherein the speed control indicator generation system is configured to generate the speed control indicator based on the path-based speed control parameter.

15. The mobile work machine of claim 10 wherein the speed control indicator generation system is configured to generate a plurality of different speed control indicators based on one or more of a remote vehicle speed control parameter, an engine load speed control parameter, or a path-based speed control parameter, each of the plurality of different speed control indicators having a different corresponding suggested speed and a different corresponding set of context data.

## Amended claims

### Amended claims in accordance with Rule 137(2) EPC.

1. A computer implemented method, comprising:
receiving (272) a sensor signal indicative of a sensed parameter;
generating (322) a speed control parameter based on the sensor signal;
generating (322) a speed control indicator indicative of a suggested speed for a mobile work machine based on the speed control parameter; and
generating (306) a speed control signal, indicative of a target speed for the mobile work machine, based on the speed control indicator, wherein generating a speed control parameter comprises:
detecting a remote vehicle within a threshold proximity of the mobile work machine;
identifying a characteristic of the remote vehicle; and
generating a remote vehicle speed control parameter corresponding to the detected remote vehicle based on the characteristic of the remote vehicle, **characterized in that** identifying a characteristic of the remote vehicle comprises:
determining whether the remote vehicle is a known remote vehicle or an unknown remote vehicle, wherein generating the remote vehicle speed control parameter comprises generating a remote known vehicle speed control parameter when the remote vehicle is determined to be a known vehicle and generating a remote unknown vehicle speed control parameter when the remote vehicle is determined to be an unknown vehicle.

2. The computer implemented method of claim 1 wherein generating a speed control parameter comprises:
detecting an engine load on an engine of the mobile work machine;
generating an engine load speed control parameter based on the engine load;
identifying an additional speed control parameter; and
generating a fused speed control parameter based on the engine load speed control parameter and the additional speed control parameter, wherein generating the speed control indicator comprises generating the speed control indicator based on the fused speed control parameter.

3. The computer implemented method of claim 1 wherein generating a speed control parameter comprises:
obtaining a route corresponding to the mobile work machine;
identifying an area of interest based on the route; and
generating a path-based speed control parameter based on the area of interest, wherein generating the speed control indicator comprises generating the speed control indicator based on the path-based speed control parameter.

4. The computer implemented method of claim 1 wherein generating a speed control indicator comprises:
generating a plurality of different speed control indicators based on one or more of a remote vehicle speed control parameter, an engine load speed control parameter, or a path-based speed control parameter, each of the plurality of different speed control indicators having a separate suggested speed and a set of context data.

5. The computer implemented method of claim 4 wherein generating a speed control signal comprises:
generating the speed control signal based on the suggested speed and the context data in the plurality of different speed control indicators.

6. The computer implemented method of claim 5 wherein generating the speed control signal based on the suggested speed and the context data in the plurality of different speed control indicators comprises:
combining the suggested speed in the plurality of different speed control indicators based on the context data to obtain a combined suggested speed; and
generating the speed control signal based on the combined suggested speed.

7. The computer implemented method of claim 5 wherein generating the speed control signal based on the suggested speed and the context data in the plurality of different speed control indicators comprises:
selecting one of the suggested speeds in the plurality of different speed control indicators based on the context data to obtain a selected speed; and
generating the speed control signal based on the selected speed.

8. A mobile work machine, comprising:
a sensor (158) configured to generate a sensor signal indicative of a sensed parameter;
a parameter detection and processing system 190) configured to generate a speed control parameter based on the sensor signal;
a speed control indicator generation system (232) configured to generate a speed control indicator indicative of a suggested speed for the mobile work machine based on the speed control parameter; and
a speed signal generator configured to generate a speed control signal, indicative of a target speed for the mobile work machine, based on the speed control indicator, wherein the parameter detection and processing system comprises:
a proximity detector configured to detect a remote vehicle within a threshold proximity of the mobile work machine; and
a remote vehicle parameter detection system configured to identify a characteristic of the remote vehicle and generate a remote vehicle speed control parameter corresponding to the detected remote vehicle based on the characteristic of the remote vehicle, **characterized in that** the remote vehicle parameter detection system comprises:
a known vehicle system configured to determine whether the remote vehicle is a known remote vehicle or an unknown remote vehicle and generate a remote known vehicle speed control parameter when the remote vehicle is determined to be a known vehicle; and
an unknown vehicle system configured to generate a remote unknown vehicle speed control parameter when the remote vehicle is determined to be an unknown vehicle.

9. The mobile work machine of claim 8 and further comprising:
an engine load sensor configured to detect an engine load on an engine of the mobile work machine;
an engine load parameter detection system configured to generate an engine load speed control parameter based on the engine load, the parameter detection and processing system being configured to identify an additional speed control parameter; and
a parameter fusion system configured to generate a fused speed control parameter based on the engine load speed control parameter and the additional speed control parameter, wherein the speed control indicator generation system is configured to generate the speed control indicator based on the fused speed control parameter.

10. The mobile work machine of claim 8 wherein the parameter detection and processing system comprises:
a path-based parameter detection system configured to obtain a route corresponding to the mobile work machine; and
an area of interest system configured to identify an area of interest based on the route and generate a path-based speed control parameter based on the area of interest, wherein the speed control indicator generation system is configured to generate the speed control indicator based on the path-based speed control parameter.

11. The mobile work machine of claim 8 wherein the speed control indicator generation system is configured to generate a plurality of different speed control indicators based on one or more of a remote vehicle speed control parameter, an engine load speed control parameter, or a path-based speed control parameter, each of the plurality of different speed control indicators having a different corresponding suggested speed and a different corresponding set of context data.
